# EUROPÄISCHE PATENTSCHRIFT

(11) **EP 1 168 881 B1**
(45) Veröffentlichungstag und Bekanntmachung des Hinweises auf die Patenterteilung: **21.01.2004**
(21) Anmeldenummer: 01104384.1
(22) Anmeldetag: 23.02.2001
(51) Int. Cl.: H04Q 11/04, H04Q 3/62

(54) **Verfahren zur Übertragung von User-to-User-Signalisierungen zwischen zwei Telekommunikationsendgeräten**
Method of transmission of user-to-user signalling between two telecommunication terminals
Méthode de transmission de signalisation utilisateur-utilisateur entre deux terminaux de télécommunication

(30) Priorität: 06.06.2000 DE 10027971
(43) Veröffentlichungstag der Anmeldung: 02.01.2002
(73) Patentinhaber: Tenovis GmbH & Co. KG, 60362 Frankfurt am Main (DE)
(72) Erfinder: Kayser, Udo, D-42285 Wuppertal (DE); Pohler, Walter, 41564 Karst (DE)
(74) Vertreter: Bohnenberger, Johannes, Dr.

(56) Entgegenhaltungen:
- EP-A- 0 967 830
- EP-A- 0 994 616
- US-A- 5 566 182

## Beschreibung

### Stand der Technik

Die Erfindung geht aus von einem Verfahren zur Übertragung von User-to-User-Signalisierungen zwischen zwei Telekommunikationsendgeräten nach der Gattung des unabhängigen Patentanspruchs.

Es ist bereits bekannt, dass bei DSS1 eine User-to-User-Signalisierung definiert ist. DSS1 gestattet die Übertragung von User-to-User-Daten in ausgewählten Verbindungszuständen während des Verbindungsaufbaus,-des Verbindungsabbaus und bei aktiver Verbindung. DSS1 ist ein ISDN-Protokoll, das insbesondere für das öffentliche digitale Telefonnetz verwendet wird. Diese Definition für die User-to-User-Signalisierung ist im Standard EN 300 286 angegeben.

Aus der EP-A-0 967 830 ist ein Verfahren zur Übertragung von User-to-User-Signalisierungen zwischen zwei Telekommunikationsendgeräten bekannt, wobei ein Telekommunikationsendgerät, das sendet, die User-to-User-Signalisierung erzeugt, die Übertragung der User-to-User-Signalisierung über gleiche und/oder unterschiedliche Telekommunikationsanlagen mittels des Signalisierungsverfahrens PSS1/QSIG durchgeführt wird, die zwei Telekommunikationsendgeräte jeweils an Telekommunikationsanlagen angeschlossen werden, die User-to-User-Signalisierungen transparent übertragen werden, ein empfangendes Telekommunikationsendgerät entsprechend der User-to-User-Signalisierung reagiert und die User-to-User-Signalisierung während des Verbindungsaufbaus und/oder -abbaus übertragen wird und wobei.die Signalisierung in verschiedenen Meldungen des QSIG-Standards und speziell im Informationselement FACILITY übertragen werden kann.

Aus der EP-A-0 994 616 ist des weiteren ein Telekommunikationsverfahren bekannt, bei dem User-to-User-Signalisierungen von einer TK-Anlage ignoriert werden, falls diese sie nicht unterstützen kann.

### Vorteile der Erfindung

Das erfindungsgemäße Verfahren zur Übertragung von User-to-User-Signalisierungen zwischen zwei Telekommunikationsendgeräten baut darauf auf, dass User-to-User-Signalisierungen in einer Auf- und/oder Abbauphase einer Verbindung auch dann durchgeführt werden können, wenn PSS1/QSIG-Verbindungen vorliegen. Damit ist die Übertragung von User-to-User-Signalisierungen bei privaten Kommunikationsnetzen möglich, die oftmals aus Telekommunikationsanlagen unterschiedlicher Hersteller aufgebaut sind, die dann über PSS1/QSIG miteinander kommunizieren. Damit werden User-to-User-Informationen, die eine effiziente Art der Informationsübertragung darstellen, auch bei der Verwendung von dem weit verbreiteten PSS1/QSIG-Protokoll übertragen.

Wesentlich ist, dass die User-to-User-Signalisierungen in den Basic-Call-Meldungen SETUP, ALERT, DISCONNECT, PROGRESS und der APDU-Transport-Meldung FACILITY mittels des Informationselements FACILITY übertragen werden. Damit wird die vorhandene Meldungsstruktur vorteilhafterweise verwendet.

Erfindungsgemäß ist vorgesehen, dass bei erfolgter Einzelwahl die empfangende Telekommunikationsanlage die User-to-User-Signalisierung zwischenspeichert, bis die Einzelwahl abgeschlossen ist und dass dann die User-to-User-Signalisierung zu dem entsprechenden Telekommunikationsendgerät übertragen wird.

Durch die in den abhängigen Ansprüchen aufgeführten Maßnahmen und Weiterbildungen sind vorteilhafte Verbesserungen des im unabhängigen Patentanspruch angegebenen Verfahrens zur Übertragung von User-to-User-Signalisierungen zwischen zwei Telekommunikationsendgeräten möglich.

So ist es von Vorteil, dass eine empfangene User-to-User-Signalisierung direkt von der empfangenden Telekommunikationsanlage zu dem entsprechenden Telekommunikationsendgerät weitergeleitet wird. Die User-to-User-Informationen werden unter anderem dazu genutzt, beliebige Vorgänge in entfernten Geräten über das öffentliche Telekommunikationsnetz zu steuern. Man kann beispielsweise eine Steuersequenz übertragen, die beim Zielgerät eine akustische Raumüberwachung startet. Mittels des erfindungsgemäßen Verfahrens funktioniert diese Steuerung auch, wenn Teile des Verbindungsweges über PSS1/QSIG-Leitungen geführt werden.

Weiterhin ist es von Vorteil, dass von den Telekommunikationsanlagen, die die User-to-User-Signalisierung nicht unterstützen, die User-to-User-Informationen ignoriert werden.

Weiterhin ist es von Vorteil, dass das Verfahren folgende Konfigurationen abdeckt: Sendendes und empfangendes Telekommunikationsendgerät sind unmittelbar an eine Telekommunikationsanlage des PSS1/QSIG-Netzes angeschlossen. Sendendes und empfangendes Telekommunikationsendgerät sind Teil des öffentlichen Netzes (DSS1), die Verbindung wird aber teilweise über PSS1/QSIG-Leitungen geführt. Das sendende Telekommunikationsendgerät ist unmittelbar an eine Telekommunikationsanlage des PSS1/QSIG-Netzes angeschlossen und das empfangende Telekommunikationsendgerät ist Teil des DSS1. Das sendende Telekommunikationsendgerät ist Teil des DSS1 und das empfangende Telekommunikationsendgerät unmittelbar an eine Telekommunikationsanlage des PSS1/QSIG-Netzes angeschlossen.

Vorteilhafterweise weist eine Telekommunikationsanlage Mittel auf, um das erfindungsgemäße Verfahren durchzuführen. Dabei ist es vorteilhafterweise auch möglich, dass die Telekommunikationsendgeräte, die an die Telekommunikationsanlagen angeschlossen sind, auch über das DSS1-Netz mit den Telekommunikationsanlagen verbunden sein können. Damit sind eine höhere Flexibilität erreicht und eine Vergrößerung des Anwendungsspektrums realisiert.

### Zeichnung

Ausführungsbeispiele der Erfindung sind in der Zeichnung dargestellt und in der nachfolgenden Beschreibung näher erläutert. Es zeigt Figur 1 ein Blockschaltbild eines Übertragungssystems, Figur 2 die Übertragung der User-to-User-Signalisierung bei einer neu aufzubauenden Verbindung während der Wahl von der Ursprungsanlage zu der Zielanlage, Figur 3 die Übertragung der User-to-User-Signalisierung von der Ursprungsanlage zu der Zielanlage beim Auslösen einer aktiven Verbindung durch die Ursprungsanlage, Figur 4 die Übertragung der User-to-User-Signalisierung bei einer aufzubauenden Verbindung von der Ursprungsanlage zu der Zielanlage nach Abschluß der Wahl, Figur 5 die Übertragung der User-to-User-Signalisierung von der Zielanlage zu der Ursprungsanlage beim Auslösen einer aktiven Verbindung durch die Zielanlage, Figur 6 die Übertragung der User-to-User-Signalisierung von der Zielanlage zu der Ursprungsanlage während des Verbindungsaufbaus nach Abschluß der Wahl, Figur 7 den Ablauf der Übertragung der User-to-User-Signalisierung in Basic-Call-Meldungen und Figur 8 die Softwarestruktur in einer Telekommunikationsanlage.

### Beschreibung

User-to-User-Signalisierungen bedeuten die Übertragung von Informationsnachrichten von Telekommunikationsendgerät zu Telekommunikationsendgerät. Damit können effizient kurze Nachrichten oder Steuersequenzen übertragen werden. User-to-User-Informationen und User-to-User-Signalisierungen werden im folgenden als Synonyme verwendet.

Eine Telekommunikationsanlage stellt eine Vorrichtung dar, die Telekommunikationsendgeräte oder ein Kommunikationsnetz an ein weiteres Kommunikationsnetz, üblicherweise ISDN, anschließt. Weiterhin weist eine Telekommunikationsanlage Mittel zur Verarbeitung von Meldungen, die über das Kommunikationsnetz übertragen werden, auf. Solche Mittel sind insbesondere Prozessoren und Speicher. Im folgenden beschreibt der Begriff Ursprungsanlage die Telekommunikationsanlage, in welcher das Telekommunikationsendgerät unmittelbar beziehungsweise über eine DSS1-Amtsleitung angeschaltet ist, welches den Aufbau einer Verbindung initiiert beziehungsweise initiiert hat. Im folgenden beschreibt der Begriff Zielanlage die Telekommunikationsanlage, an welcher das Telekommunikationsendgerät unmittelbar beziehungsweise über eine DSS1-Amtsleitung angeschaltet ist, zu dem hin eine Verbindung aufgebaut wurde beziehungsweise wird.

ISDN (Integrated Services Digital Network) ist eine digitale Vermittlungstechnik, die alle vermittlungstechnischen Dienste (zum Beispiel Sprache, Daten, Video und Fax) in ein digitales Leitungsnetz integriert. ISDN stellt eine Schnittstelle dar, um digitale Dienste unabhängig von Leitungsart oder der Nutzung der Leitungen zu verwenden.

QSIG (Signalisierung am Q-Referenzpunkt) beziehungsweise PSS1 (Private Integrated Signalling System Number 1) ist ein Signalisierungsverfahren, das international und für den europäischen Raum standardisiert ist. QSIG und PSS1 sind Synonyme. Die Standardisierung erfolgt auf internationaler Ebene durch ISO/IEC und im europäischen Raum durch die ETSI und ECMA, wobei eine gegenseitige Harmonisierung der Standards angestrebt wird. QSIG ist offen für Hersteller von Telekommunikationsanlagen. Es ermöglicht daher insbesondere die Signalisierung und damit Kommunikation zwischen Telekommunikationsanlagen von verschiedenen Herstellern, sofern diese Telekommunikationsanlagen nach QSIG signalisieren. QSIG beziehungsweise PSS1 definieren ein ISDN (Integrated Services Digital Network) für die Teilnehmer eines privaten Kommunikationsnetzes. Folgende Standards beschreiben die grundlegende Kommunikation bei QSIG, den sogenannten basic call: ETS 300 172 Edition 3, ISO/IEC 11572 Edition 2 und ECMA 143 3^{rd} Edition. Im Standard sind die Basisfunktionen der Signalisierung definiert. Zusätzliche Funktionen (im internationalen Sprachgebrauch: Supplementary Services) nutzen zu ihrer Steuerung das standardisierte ROSE (Remote Operation Service Elements)-Konzept. Das ROSE-Konzept definiert also die Umgebung, um zusätzliche Funktionen zu realisieren. Das ROSE-Konzept findet Anwendung bei standardisierten Supplementary Services, es wird aber auch zur Steuerung herstellerspezifischer Supplementary Services eingesetzt. Im Allgemeinen definiert ROSE fünf Aktionen:
RO-Invoke: eine Operation wird durch diese Aktion aufgerufen, d. h. die Operation wird bei der Partnerinstanz, also der gerufenen Telekommunikationsanlage, ausgelöst.
RO-Result: hier wird das positive Ergebnis einer Operation gemeldet, d. h. der Aufruf der Operation ist erfolgreich.
RO-Error: diese Aktion meldet ein negatives Ergebnis einer Operation, d. h. die Operation wurde nicht ausgeführt.
RO-Reject-U: diese Aktion wird durchgeführt, wenn eine Anforderung im Fehlerfall durch den Benutzer des Dienstes abgewiesen wird.
RO-Reject-P: hier wird eine Anforderung im Fehlerfall durch den Erbringer des Dienstes abgewiesen.

Diese ROSE-Aktionen werden auf vier Protokollelemente abgebildet. Solche Protokollelemente werden im englischen als Application Protocol Data Unit (APDU) bezeichnet. Die vier Protokollelemente sind: RO-Invoke, RO-Return-Result, RO-Return-Error, RO-Reject.

Die ROSE Protokollelemente werden mittels des FACILITY-Information-Element übertragen. Das FACILITY-Information-Element wird entweder mit Basismeldungen (Meldungen, die einen Verbindungsaufbau und Verbindungsabbau steuern), wie SETUP, ALERT, CONNECT, PROGRESS oder DISCONNECT übertragen oder, falls keine Basismeldungen zur Verfügung stehen, mit der dann zu verwendenden Meldung FACILITY. Mehrere ROSE Protokollelemente können in einem FACILITY-Informationselement enthalten sein.

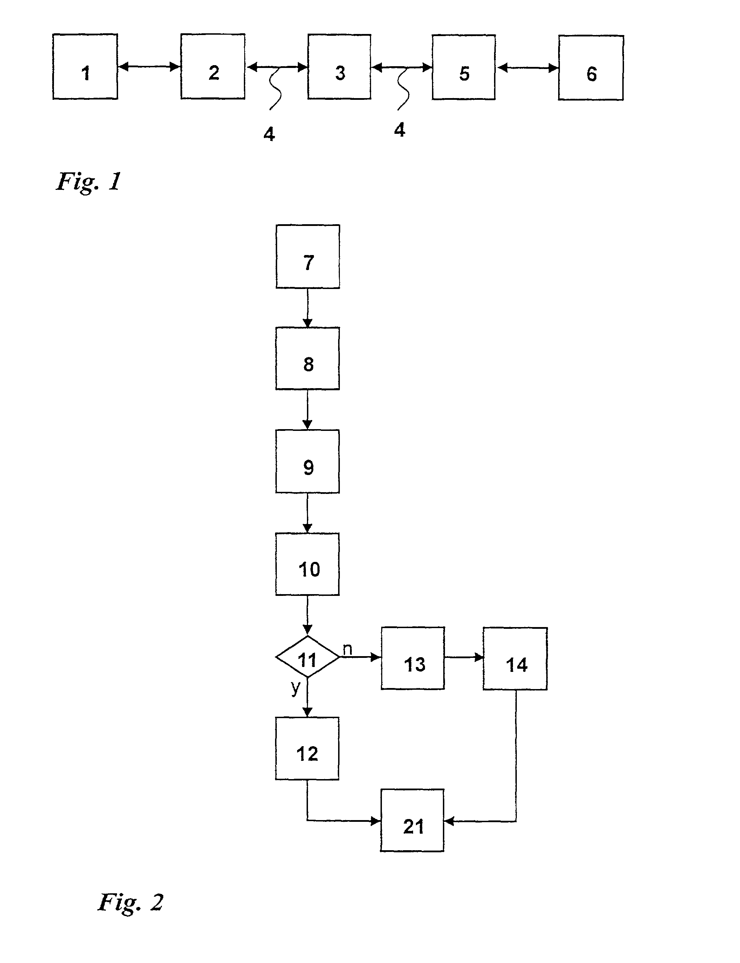

In Figur 1 ist als Blockschaltbild ein Übertragungssystem dargestellt, mittels dessen User-to-User-Signalisierungen übertragen werden. Ein Telekommunikationsendgerät 1 sendet und empfängt Daten von einer Ursprungsanlage 2, die über eine QSIG-Leitung 4 mit einer Transitanlage 3 verbunden ist. Hier ist beispielhaft eine Transitanlage dargestellt, die die User-to-User-Signalisierungen innerhalb der Nachrichten transparent weiter überträgt. Alternativ ist es möglich, dass keine Transitanlage oder mehr als eine Transitanlage vorliegen. Auch die Transitanlage 3 ist wie die Ursprungsanlage eine Telekommunikationsanlage.

Die Transitanlage 3 ist über eine QSIG-Leitung 4 mit einer Zielanlage 5 verbunden. An die Zielanlage 5 ist über eine Leitung ein Telekommunikationsendgerät 6 angeschlossen. Die Telekommunikationsendgeräte 1 und 6 erzeugen Nachrichten oder Steuerdaten, übertragen sie mittels der Telekommunikationsanlagen 2, 3 und 5 und empfangen Nachrichten oder Steuerdaten von dem jeweils anderen Telekommunikationsendgerät. Die Nachrichten beziehungsweise Steuerdaten werden dann von dem jeweiligen Telekommunikationsendgerät ausgewertet. Zu diesen Nachrichten gehören hier insbesondere User-to-User-Informationen.

In Figur 2 wird als Flußdiagramm die Übertragung der User-to-User-Signalisierung bei einer neu aufzubauenden Verbindung während der Wahl von der Ursprungsanlage zu der Zielanlage dargestellt. In Verfahrensschritt 7 wird der Aufbau einer Verbindung zwischen dem Telekommunikationsendgerät 1 und dem Telekommunikationsendgerät 6 begonnen und von dem Telekommunikationsendgerät 1 wird eine User-to-User-Signalisierung erzeugt, um sie dann der Ursprungsanlage 2 zu übertragen.

In Verfahrensschritt 8 wird dann von der Ursprungsanlage 2 mittels der Verbindungsaufbaumeldung SETUP und dem Informationselement FACILITY die User-to-User-Signalisierung übertragen. Dabei enthält die Verbindungsaufbaumeldung SETUP das Informationselement FACILITY mit der User-to-User-Signalisierung. In Verfahrensschritt 9 überträgt die Transitanlage 3 die in der SETUP-Meldung enthaltenen User-to-User-Daten transparent. D.h. die Transitanlage 3 nimmt keine Veränderungen an dem ankommenden FACILITY-Informations-Element vor, das in der SETUP-Meldung enthalten ist, sondern leitet es unverändert an die Zielanlage 5 weiter.

In Verfahrensschritt 10 empfängt die Zielanlage 5 die SETUP-Meldung mit dem Informationsselement FACILITY und der User-to-User-Signalisierung. In Verfahrensschritt 11 wird festgestellt, ob eine Blockwahl vorliegt oder nicht. Die Blockwahl bedeutet, dass alle Wahlziffern, die zum Erreichen des Zielgeräts erforderlich sind, bereits in der SETUP-Meldung enthalten sind. Beispielsweise geschieht dies, wenn eine abgespeicherte Nummer von dem Telekommunikationsendgerät 1 abgerufen wird, um das Telekommunikationsendgerät 6 zu rufen. Liegt eine Blockwahl vor, dann wird in Verfahrensschritt 12 die in der SETUP-Meldung enthaltene User-to-User-Signalisierung direkt zum Telekommunikationsendgerät 6 als dem gerufenem Teilnehmer übertragen.

Liegt keine Blockwahl vor, dann liegt Einzelwahl vor. Einzelwahl bedeutet, dass die einzelnen Ziffern einer Telefonnummer einzeln nacheinander eingegeben werden, wie es beim herkömmlichen Wählen einer Telefonnummer üblich ist. Dies kann dazu führen, dass in der SETUP-Meldung nicht mehr die vollständige Zielrufnummer enthalten ist. Die restlichen Ziffern werden dann in nachfolgenden INFORMATION-Meldungen übertragen, bis die Wahl vollständig ist. In diesem Fall wird in Verfahrensschritt 13 die User-to-User-Signalisierung zwischengespeichert, bis die Wahl vollständig ist. Dann wird in Verfahrensschritt 14 die in der Meldung SETUP enthaltene User-to-User-Signalisierung an das Telekommunikationsendgerät 6 übertragen.

In Verfahrensschritt 21 nimmt das Telekommunikationsendgerät 6 die User-to-User-Signalisierung in Empfang. Die User-to-User-Signalisierung kann Daten transportieren, die zur Anzeige gebracht werden oder Steuerungsfunktionen aufweisen.

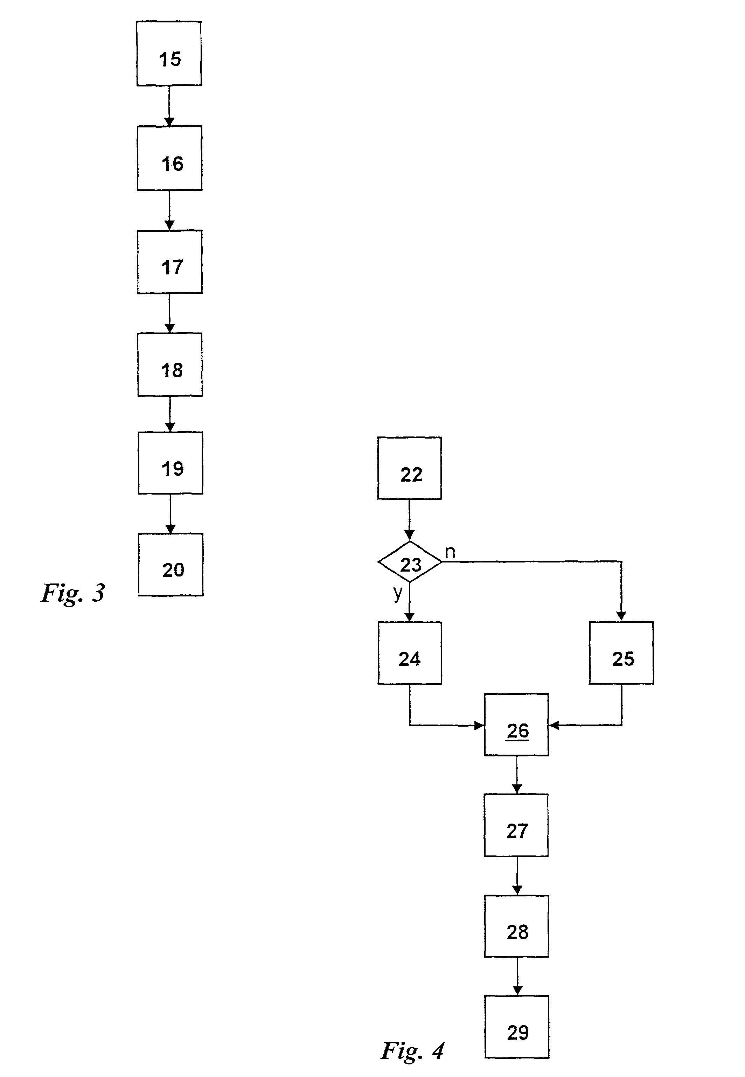

In Figur 3 wird als Flußdiagramm die Übertragung der User-to-User-Signalisierung von der Ursprungsanlage 2 zu der Zielanlage 5 beim Auslösen einer aktiven Verbindung durch die Ursprungsanlage 2 dargestellt. In Verfahrensschritt 15 wird von dem Telekommunikationsendgerät 1 die User-to-User-Signalisierung erzeugt und die Auslösung der Verbindung zu dem Telekommunikationsendgerät 6 begonnen. In Verfahrensschritt 16 wird dann von der Ursprungsanlage 2 die Meldung DISCONNECT mit dem Informationselement FACILITY zu der Zielanlage 5 übertragen, wobei das Informationselement FACILITY erneut die User-to-User-Signalisierung aufweist. Die Meldung DISCONNECT wird zur Auslösung einer Verbindung verwendet.

In Verfahrensschritt 17 überträgt die Transitanlage 3 transparent das Informationselement FACILITY in der Meldung DISCONNECT und sendet sie weiter zu der Zielanlage 5. In Verfahrensschritt 18 empfängt die Zielanlage die Meldung DISCONNECT mit dem Informationselement FACILITY. In Verfahrensschritt 19 wird die im Informationselement FACILITY enthaltene User-to-User-Signalisierung zu dem Telekommunikationsendgerat 6 übertragen. Im Verfahrensschritt 20 reagiert das Telekommunikationsendgerät 6 entsprechend der empfangenen User-to-User-Signalisierung.

In Figur 4 wird als Flußdiagramm die Übertragung der User-to-User-Signalisierung bei einer aufzubauenden Verbindung von der Ursprungsanlage 2 an die Zielanlage 5 nach Abschluß der Wahlphase dargestellt. In Verfahrensschritt 22 wird festgestellt, ob eine User-to-User-Signalisierung in dem Telekommunikationsendgerät 1 vorliegt. Ist das der Fall, dann wird die User-to-User-Signalisierung von der Ursprungsanlage 2 an die Zielanlage 5 übertragen. Ist das jedoch nicht der Fall wird weiter überprüft, ob eine User-to-User-Signalisierung vorliegt. In den folgenden Verfahrensschritten wird überprüft, mit welcher Meldung die User-to-User-Signalisierung zu übertragen ist.

In Verfahrensschritt 23 wird von der Ursprungsanlage 2 überprüft, ob die Meldung PROGRESS zu verschicken ist. Ist dies der Fall, dann wird in Verfahrensschritt 24 die User-to-User-Signalisierung mit der Meldung PROGRESS im Informationselement FACILITY übertragen. Ist das jedoch nicht der Fall, dann wird in Verfahrensschritt 25 die User-to-User-Signalisierung mit der Meldung FACILITY im Informationselement FACILITY übertragen.

In Verfahrensschritt 26 führt die Transitanlage 3 erneut die transparente Übertragung des in der Meldung enthaltenen Informationselements FACILITY durch. In Verfahrensschritt 27 empfängt die Zielanlage 5 die von der Ursprungsanlage 2 gesendete Meldung und in Verfahrensschritt 28 überträgt die Zielanlage 5 die in der Meldung enthaltene User-to-User-Signalisierung an das Telekommunikationsendgerät 6. In Verfahrensschritt 29 reagiert das Telekommunikationsendgerät 6 entsprechend der empfangenen User-to-User-Signalisierung.

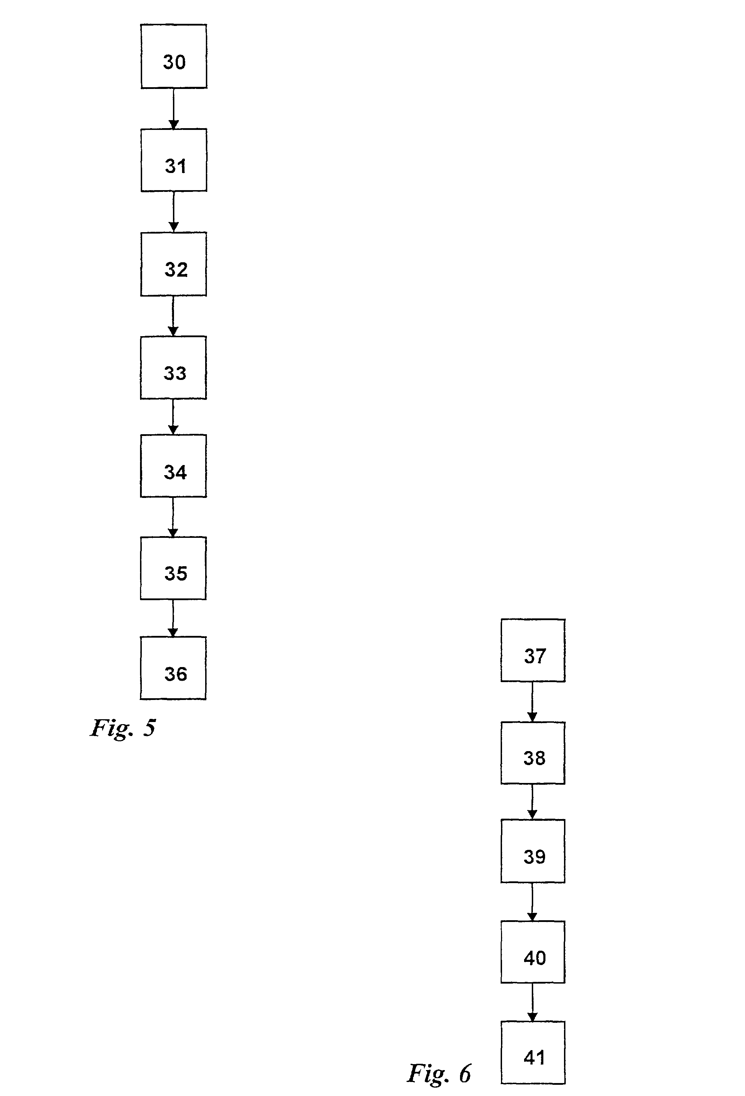

In Figur 5 wird als Flußdiagramm die Übertragung der User-to-User-Signalisierung beim Auslösen einer aktiven Verbindung von der Zielanlage 5 zu der Ursprungsanlage 2 dargestellt. In Verfahrensschritt 30 wird festgestellt, ob das Telekommunikationsendgerät 6, also der gerufene Teilnehmer eine User-to-User-Signalisierung erzeugt hat. Ist das der Fall wird in Verfahrensschritt 31 fortgefahren, ist das jedoch nicht der Fall, dann werden andere Aktionen durchgeführt (Auslösen der Verbindung ohne User-to-User-Informationen).

In dem Verfahrensschritt 31 wird daher die Verbindung ausgelöst und die User-to-User-Signalisierung an die Zielanlage 5 übertragen. In Verfahrensschritt 32 überträgt dann die Zielanlage 5 die Meldung DISCONNECT mit dem Informationselement FACILITY, das die User-to-User-Signalisierung des Telekommunikationsendgeräts 6 aufweist. In Verfahrensschritt 32 führt die Transitanlage 3 die transparente Übertragung der User-to-User-Daten im FACILITY-Informations-Element innerhalb der Meldung DISCONNECT durch. In Verfahrensschritt 34 empfängt die Ursprungsanlage 2 die Meldung DISCONNECT mit dem Informationselement FACILITY und der darin enthaltenen User-to-User-Signalisierung.

In Verfahrensschritt 35 überträgt die Ursprungsanlage 2 die im Informationselement FACILITY enthaltene User-to-User-Signalisierung an das Telekommunikationsendgerät 1. Das Telekommunikationsendgerät 1 reagiert dann entsprechend der empfangenen User-to-User-Signalisierung. Im folgenden wird dann der Auslösevorgang fortgesetzt.

In Fig. 6 wird die Übertragung der User-to-User-Signalisierung von der Zielanlage 5 zu der Ursprungsanlage 2 während des Verbindungsaufbaus nach Abschluß der Wahl mittels eines Flußdiagramms dargestellt.

In Verfahrensschritt 37 baut die Ursprungsanlage 2 eine Verbindung zu der Zielanlage 5 auf. Dies beruht darauf, dass das Telekommunikationsendgerät 1, dass mit der Ursprungsanlage 2 verbunden ist, eine Verbindung zu dem Telekommunikationsendgerät 6 herstellen möchte. Die Wahl ist in Verfahrensschritt 37 bereits abgeschlossen. Die Übertragung der User-to-User-Information in Verfahrensschritt 37 ist bei Fig. 2 beschrieben.

In Verfahrensschritt 38 stellt die Zielanlage 5 fest, dass die Zielanlage auf den Verbindungsaufbauwunsch von der Ursprungsanlage 2 reagieren muss. Zusätzlich liegen von dem Telekommunikationsendgerät 6 User-to-User-Informationen vor, die zur Ursprungsanlage 2 übertragen werden müssen. Hier tritt nun eine Fallunterscheidung auf, je nachdem mit welcher Meldung die Zielanlage 5 auf den Verbindungsaufbauwunsch von der Ursprungsanlage 2 reagiert.

In Verfahrensschritt 39 versendet die Zielanlage 5 die User-to-User-Informationen von dem Telekommunikationsendgerät 6 mit einer der nachfolgend beschriebenen Meldungen im Informationselement FACILITY.

Folgende Meldungen sind dabei zu unterscheiden:

Ist das Telekommunikationsendgerät 6 frei, dann wird dies der Ursprungsanlage 2 mittels der Meldung ALERT mittgeteilt.

Soll die Verbindung nun schon im Verbindungsaufbau ausgelöst werden, dann sendet die Zielanlage 5 der Ursprungsanlage 2 die Meldung DISCONNECT. Die Auslösung wird dann vorgenommen, wenn beispielsweise das Telekommunikationsendgerät 6 besetzt oder nicht erreichbar ist. Ein anderer Grund ist eine Falschwahl.

Liegt eine sogenannte Interworking-Situation vor, d.h. in der Zielanlage findet ein Übergang in das öffentliche DSS1-Netz statt, oder möchte die Zielanlage 5 die Verfügbarkeit von Tönen und/oder Ansagen signalisieren, dann sendet die Zielanlage 5 der Ursprungsanlage 2 die Meldung PROGRESS.

Falls keine Basic-Call-Meldung aber bereits eine Signalisierungsbeziehung zwischen der Zielanlage 5 und dem Telekommunikationsendgerät 6 besteht, beispielsweise vor einer ALERT-Meldung oder zwischen einer ALERT-Meldung und einer CONNECT-Meldung, dann wird die Meldung FACILITY verwendet, um mittels des Informationselements FACILITY die User-to-User-Information zu übertragen.

In Verfahrensschritt 40 wird der Verbindungsaufbau gemäß der von der Zielanlage 5 gesendeten Meldung von der Ursprungsanlage 2 fortgesetzt beziehungsweise die Verbindung ausgelöst, falls die Ursprungsanlage 2 von der Zielanlage 5 eine Auslösemeldung erhalten hat. Die in der empfangenen Meldung enthaltenen User-to-User-Informationen werden von der Ursprungsanlage 2 zu dem Telekommunikationsendgerät 1 weiterübertragen.

In Verfahrensschritt 41 verarbeitet das Telekommunikationsendgerät 1 die User-to-User-Informationen.

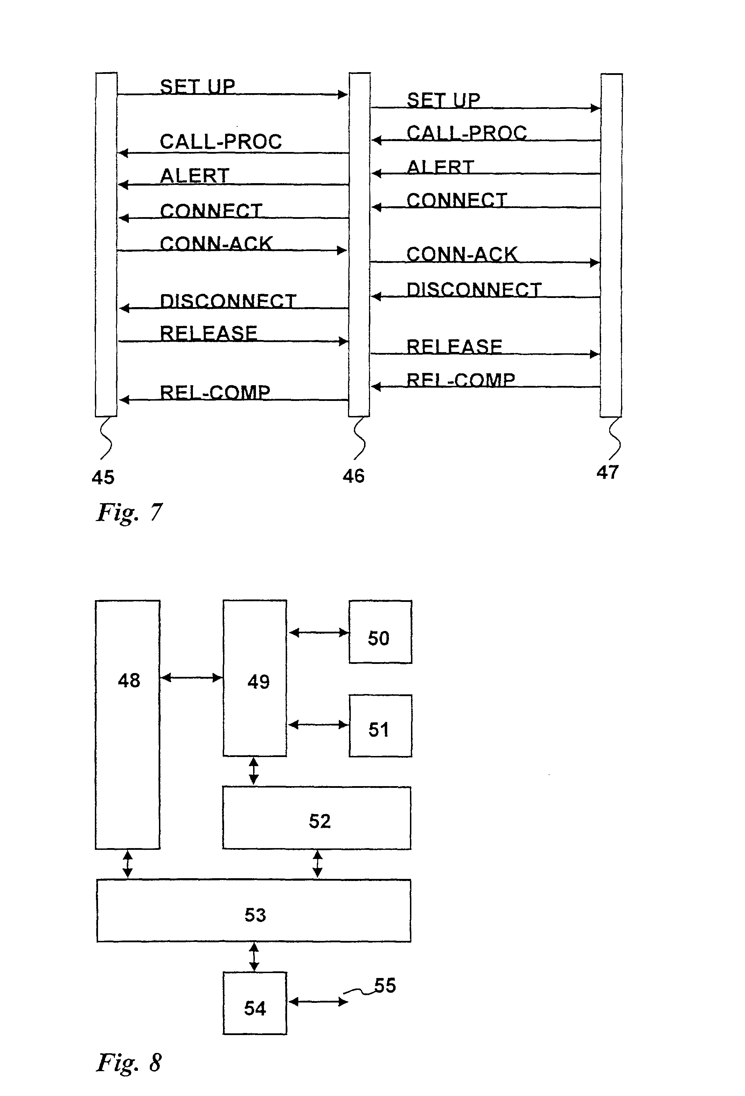

In Figur 7 ist als Diagramm der Ablauf der Übertragung der User-to-User-Signalisierung in Basic-Call-Meldungen beispielhaft dargestellt. Mittels der vertikalen Balken 45, 46 und 47 ist jeweils die Ursprungsanlage 2, die Transitanlage 3 und die Zielanlage 5 aus Fig. 1 symbolisiert.

Die Ursprungsanlage 45 sendet die Meldung SETUP, die im Informationselement FACILITY die User-to-User-Signalisierung enthalten kann. Die Zielanlage 47 quittiert den Verbindungsaufbau mit der Meldung Call-Proceed. Diese Meldung enthält keine User-to-User-Signalisierung und hat auch nicht die Möglichkeit, User-to-User-Daten zu enthalten. Mit der Meldung ALERT kann jedoch wieder von der Zielanlage 47 eine User-to-User-Signalisierung übertragen werden. Nicht jedoch mit den folgenden Meldungen CONNECT von der Zielanlage 47 zu der Ursprungsanlage 45 und mit der quittierenden Meldung CONNECT_ACKNOWLEDGE von der Ursprungsanlage 45 zu der Zielanlage 47.

Soll eine Verbindung ausgelöst werden, hier zum Beispiel von der Zielanlage 47, dann wird von der Zielanlage 47 die Meldung DISCONNECT verschickt, die wieder eine User-to-User-Signalisierung aufweisen kann. Die Ursprungsanlage 45 quittiert die Meldung DISCONNECT mit der Meldung Release, die wiederum nicht für die Übertragung von User-to-User-Signalisierungen vorgesehen ist. Schließlich quittiert die Zielanlage 47 mit der Meldung Release Complete, dass die Auslösung abgeschlossen ist. Auch diese Meldung weist nicht die Möglichkeit auf, eine User-to-User-Signalisierung zu übertragen.

In Figur 8 ist die Softwarestruktur einer Telekommunikationsanlage dargestellt. Die erfindungsgemäße User-to-User-Signalisierungsfunktion (SS[Supplementary Service]-Control for User-to-User-Signalling) 13 ist mit einem Koordinationsprozess (Coordination Function) 12 verbunden, über den die User-to-User-Signalisierungsfunktion 13 die Dienste von ROSE 14 nutzt. Die Koordinationsfunktion 12 ist weiterhin mit der GFT (Generic Functional Transport Control)-Kontrolle 15 verbunden.

Die GFT-Kontrolle 15 zeigt zwei Arten von Diensten. Zum einen die Transportdienstleistung für Protokollelemente zwischen Funktionen, die auf verschiedenen Telekommunikationsanlagen ablaufen, und zum anderen den Aufbau und den Abbau von Verbindungen ohne Nutzkanalbelegung, das sind Signalisierungsverbindungen. Die GFT-Kontrolle 15 ist mit einer Protokollkontrolle (Protocol Control) 16 verbunden, die die Übertragung von Protokollelementen zwischen benachbarten Telekommunikationsanlagen leistet und den Aufbau und Abbau von Signalisierungsverbindungen zwischen benachbarten Talekommunikationsanlagen. Auch die Rufkontrolle (Call Control) 11 ist mit der Koordinationsfunktion 12 und der Protokollkontrolle 16 verbunden. Die Protokollkontrolle 16 übergibt beziehungsweise empfängt Daten. Der Signalisierungsmechanismus 17 gibt dann die Meldungen auf die Leitung 18 oder empfängt sie von der Leitung 18.

Tabelle 1 beschreibt formal die Inhalte der User-to-User-Signalisierung in der QSIG üblichen Form. Mit dieser formalen Beschreibung in ASN.1 ist über die Codierregeln (Basic Encoding Rules) unmittelbar das Binärmuster festgelegt. Die formale Definition legt jedoch nicht nur den Inhalt der Signalisierung fest, sondern auch einen sogenannten Identifier, der diese Signalisierungsinformation innerhalb von QSIG eindeutig kennzeichnet. Der Identifier findet sich in der letzten Zeile beginnend mit Userinfo wieder.

Alle Zeilen, die mit Import beginnnen, bedeuten, dass Definitionen aus dem QSIG-Standard übernommen werden. Die Zeile, die mit Export beginnt, bedeutet, dass das hier definierte Datum anderen Anwendungen zur Verfügung gestellt wird. Die Zeile, die mit Boschqsigext beginnt, bedeutet, dass der firmenspezifische Object-Identifier für QSIG-Anwendungen der firmenspezifischen Telekommunikationsanlage festgelegt wird. Die Zeilen, die mit UserInfo beginnen und vor der Zeile beginnend mit UserInfoElem enden, definieren die neue ROSE-Operation für die User-to-User-Signalisierung. Die Zeile mit
*userinfoelem [PRIVATE 0] IMPLICIT UserInfoElem*
definiert die User-to-User-Daten innerhalb der neuen Operation. Die Zeile
*UserInfoElem ::= OCTETSTRING(SIZE(1..200))*
definiert die Datenstruktur der USer-to-User-Daten. Die Zeilen
*extension CHOICE*
*{ext [PRIVATE 1] IMPLICIT Extension*
*ext-seq[PRIVATE 2] IMPLICIT SEQUENCE OF Extension} OPTIONAL* erweitern die grundlegende Definition der neuen ROSE-Operation um ein Feld, das eine oder mehrere beliebige künftige Erweiterungen enthalten darf.

Träger der Information ist das Informationselement FACILITY. Das FACILITY-Informationselement wird mit der folgenden Kodierung für die Network-FACILITY-Extension verschickt.

| | |
|---|---|
| Source-entity | EndPINX |
| DestinationEntity | EndPINX |

Das FACILITY-Informationselement wird mit der folgenden Kodierung für die Interpretations-APDU verschickt: discardAnyUnrecognizedAPDU, ebenfalls zulässig in Abhängigkeit des Vorgangs, der mit den User-to-User-Daten gesteuert werden soll: RejectAnyUnrecognizedAPDU und clearCallIfAnyInvokePduNotRecognized.

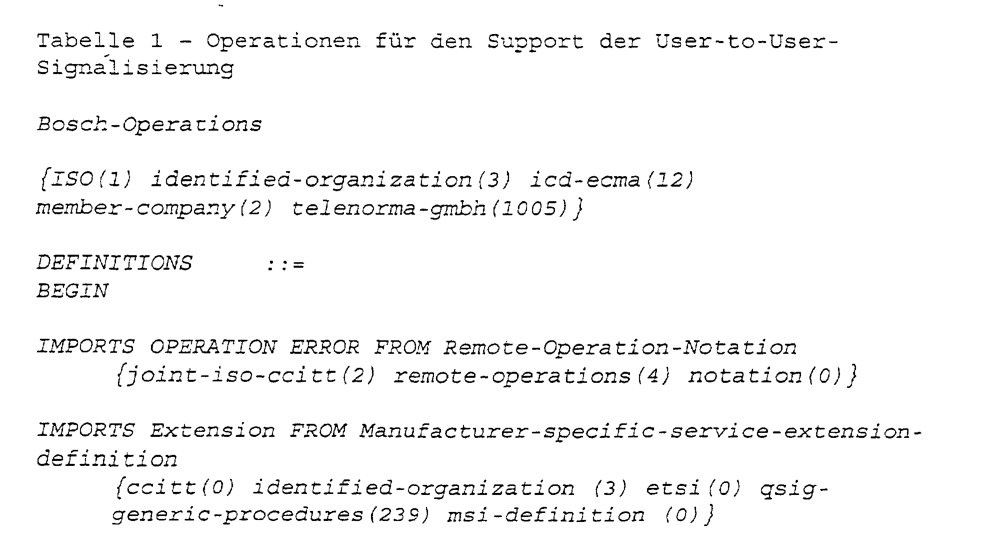

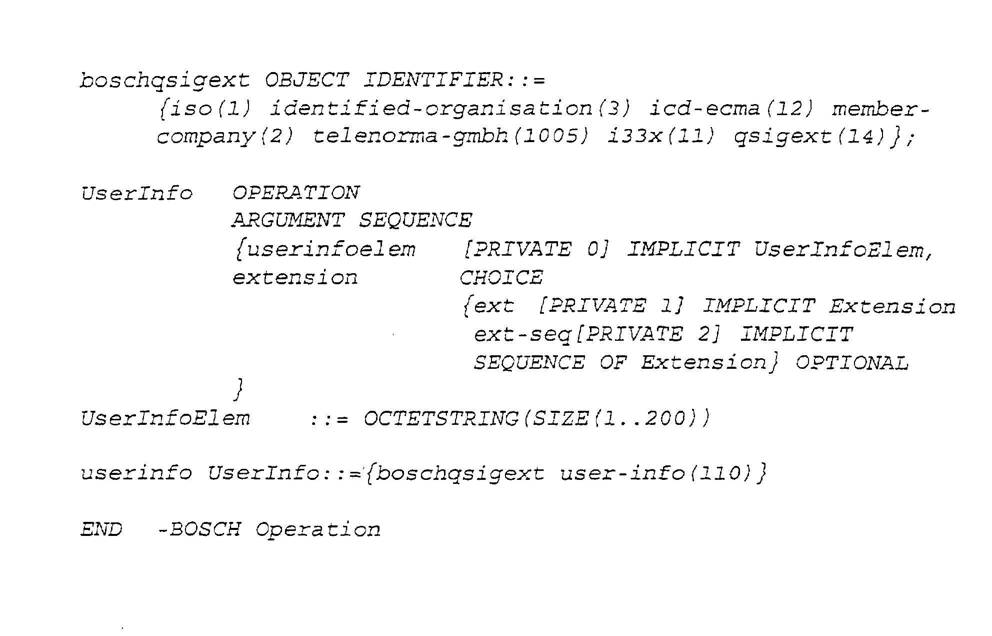

## Patentansprüche

1. Verfahren zur Übertragung von User-to-User-Signalisierungen zwischen zwei Telekommunikationsendgeräten (1, 6), wobei ein Telekommunikationsendgerät (1, 6), das sendet, die User-to-User-Signalisierung erzeugt, wobei die Übertragung der User-to-User-Signalisierung über gleiche und/oder unterschiedliche Telekommunikationsanlagen (2, 3, 5) mittels des Signalisierungsverfahrens PSS1/QSIG durchgeführt wird, wobei die zwei Telekommunikationsendgeräte (1, 6) jeweils an Telekommunikationsanlagen (2, 5) angeschlossen werden, wobei die User-to-User-Signalisierungen während des Verbindungsaufbaus und/oder -abbaus transparent übertragen werden, wobei ein empfangendes Telekommunikationsendgerät (1, 6) entsprechend der User-to-User-Signalisierung reagiert, wobei die User-to-User-Signalisierung mit einer Verbindungsaufbaumeldung SETUP oder einer Bereitschaftsmeldung ALERT oder einer Verbindungsabbaumeldung DISCONNECT oder der Meldung PROGRESS oder der Meldung FACILITY im Informationselement FACILITY übertragen wird , **dadurch gekennzeichnet dass** wenn der Verbindungsaufbau in Einzelwahl erfolgt, die in der Verbindungsaufbaumeldung SETUP enthaltene User-to-User-Signalisierung in einer Telekommunikationsanlage (3, 5) zwischengespeichert wird, bis die Einzelwahl abgeschlossen ist und dass dann die User-to-User-Signalisierung zu dem empfangenden Tel ekommunikationsendgerät (1, 6) übertragen wird.

2. Verfahren nach Anspruch 1, **dadurch gekennzeichnet, dass**, wenn der Verbindungsaufbau in Blockwahl erfolgt, die in der Verbindungsaufbaumeldung SETUP enthaltenen User-to-User-Signalisierungen direkt von einer Telekommunikationsanlage (2, 5) zu dem empfangenen Telekommunikationsendgerät (1, 6) übertragen werden.

3. Verfahren nach einem der vorhergehenden Ansprüche, dass User-to-User-Signalisierungen von einer Telekommunikationsanlage, die entweder Ursprungs- oder Zielanlage ist oder in der ein Übergang in das DSS1-Netz stattfindet, ignoriert werden, falls die Telekommunikationsanlage User-to-User-Signalisierungen nicht unterstützt.

4. Telekommunikationsanlage zur Durchführung des Verfahrens nach einem der Ansprüche 1 bis 3, **gekennzeichnet durch**
einen Zwischenspeicher zur Speicherung der in der Verbindungsaufbaumeldung SETUP enthaltenen User-to-User-Signalisierung und Übertragungsmittel zur Übertragung der User-to-User-Signalisierung zu einem empfangenden Telekommunikationsendgerät (1, 6) im Informationselement FACILITY.

5. Telekommunikationsanlage nach Anspruch 4, **dadurch gekennzeichnet, dass** die Telekommunikationsendgeräte (1, 6) Zugang zu den Telekommunikationsanlagen (2, 5) über DSS1 haben.

## Claims

1. A method of transmitting user-to-user signaling between two telecommunications terminals (1, 6), with one telecommunications terminal (1, 6), which sends, generating the user-to user signaling, the transmission of the user-to-user signaling taking place via like and/or different telecommunication facilities (2, 3, 5) by means of a signaling system PSS1/QSIG, said two telecommunications terminals (1, 6) each being connected to telecommunication facilities (2, 5), said user-to-user signaling being transmitted transparently during the connection set-up and/or connection tear-down, with a receiving telecommunications terminal (1, 6) responding corresponding to the user-to-user signaling, the user-to-user signaling being transmitted with a connection set-up message SETUP or a ready message ALERT or a connection tear-down message DISCONNECT or the message PROGRESS or the message FACILITY, **characterized in that**, when the connection set-up takes place in a single dialing operation, the user-to-user signaling contained in the connection set-up message is buffered in a telecommunication facility (3, 5) until the single dialing operation is completed, and that the user-to-user signaling is then transmitted to the receiving telecommunication facility (1, 6).

2. The method according to claim 1, **characterized in that**, when the connection set-up takes place in a block dialing, the user-to-user signaling contained in the connection set-up message SETUP is transmitted directly from a telecommunication facility (2, 5) to the receiving telecommunications terminal (1, 6).

3. The method according to any one of the preceding claims, **characterized in that** user-to-user signaling from a telecommunication facility, which is either the originating or the target facility, or in which a transition into the DSS1 network takes place, is ignored if the telecommunication facility does not support user-to-user signaling.

4. A telecommunication facility for performing the method according to any one of claims 1 through 3, **characterized by** a buffer store for storing the user-to-user signaling contained in the connection set-up message SETUP, and by transmission means for transmitting the user-to-user signaling to a receiving telecommunications terminal (1, 6) in the information element FACILITY.

5. The telecommunication facility according to claim 4, **characterized in that** the telecommunications terminals (1, 6) have access to the telecommunication facilities (2, 5) via DSS1.

## Revendications

1. Procédé de transmission de signalisations utilisateur à utilisateur entre deux terminaux de transmission de télécommunication (1, 6), un terminal de transmission de télécommunication (1, 6) qui émet générant la signalisation utilisateur à utilisateur, la transmission de la signalisation utilisateur à utilisateur étant effectuée au moyen d'installations de télécommunication semblables et/ou différentes (2, 3, 5) au moyen du procédé de signalisation PSS1/QSIG, les deux terminaux de transmission de télécommunication (1, 6) étant chaque fois raccordés à des installations de télécommunication (2, 5), les signalisations utilisateur à utilisateur, pendant l'établissement de la connexion et/ou de la déconnexion, étant transmises de façon transparente, un terminal de transmission de télécommunication (1, 6) en réception réagissant en fonction de la signalisation utilisateur à utilisateur, la signalisation utilisateur à utilisateur étant transmise avec un message d'établissement de connexion SETUP ou un message de disponibilité ALERT ou un message de déconnexion DISCONNECT ou le message PROGRESS ou le message FACILITY dans l'élément d'information FACILITY, **caractérisé en ce que** lorsque la connexion se réalise par composition individuelle, la signalisation utilisateur à utilisateur contenue dans le message de connexion SETUP est stockée provisoirement dans une installation de télécommunication (3, 5) jusqu'à ce que la sélection unique ait abouti et qu'alors la signalisation utilisateur à utilisateur est transmise au terminal de transmission de télécommunication (1, 6) en réception.

2. Procédé selon la revendication 1, **caractérisé en ce que** lorsque la connexion s'effectue par composition par bloc, les signalisations utilisateur à utilisateur contenues dans le message de connexion SETUP sont transmises directement d'une installation de télécommunication (2, 5) vers le terminal de transmission de télécommunication (1, 6) en réception.

3. Procédé selon l'une quelconque des revendications précédentes, **caractérisé en ce que** les signalisations utilisateur à utilisateur d'une installation de télécommunication qui est soit l'installation d'origine, soit l'installation cible ou dans laquelle s'effectue un passage dans le réseau DSS1 sont ignorées lorsque l'installation de communication ne gère par les signalisations utilisateur à utilisateur.

4. Installation de télécommunication pour appliquer le procédé selon l'une quelconque des revendications 1 à 3, **caractérisée par** un stockage intermédiaire pour stocker la signalisation utilisateur à utilisateur contenue dans le message de connexion SETUP et un moyen de transmission pour la transmission de la signalisation utilisateur à utilisateur vers un terminal de transmission de télécommunication (1, 6) en réception dans l'élément d'information FACILITY.

5. Installation de télécommunication selon la revendication 4, **caractérisée en ce que** les terminaux de transmission de télécommunication (1, 6) ont accès aux installations de télécommunication (2, 5) par DSS1.
